## Europäisches Patentamt
## European Patent Office
## Office européen des brevets

(19)

(11) Numéro de publication: **0 086 682**
**B1**

(12) # FASCICULE DE BREVET EUROPÉEN

(45) Date de publication du fascicule du brevet:
**24.09.86**

(51) Int. Cl.⁴: **G 11 B 23/02**, G 11 B 17/02

(21) Numéro de dépôt: **83400097.8**

(22) Date de dépôt: **14.01.83**

(54) **Mémoire à disques comportant une cartouche amovible pour disque(s) magnétique(s) et cartouche pour disque magnétique.**

(30) Priorité: **11.02.82 FR 8202206**

(43) Date de publication de la demande:
**24.08.83 Bulletin 83/34**

(45) Mention de la délivrance du brevet:
**24.09.86 Bulletin 86/39**

(84) Etats contractants désignés:
**DE GB IT NL SE**

(56) Documents cité:
**DE-B-1 155 614**
**US-A-3 304 544**
**US-A-3 615 070**
**US-A-3 938 192**

(73) Titulaire: **COMPAGNIE INTERNATIONALE POUR L'INFORMATIQUE CII - HONEYWELL BULL (dite CII- HB), 94, avenue Gambetta, F-75020 Paris (FR)**

(72) Inventeur: **Barski, Guy, 94 Avenue Gambetta, F-75020 Paris (FR)**

(74) Mandataire: **Gouesmel, Daniel, 94, avenue Gambetta, F-75020 Paris (FR)**

EP 0 086 682 B1

LIBER, STOCKHOLM 1986

## Description

La présente invention concerne une mémoire à disques incluant une cartouche amovible pour disque(s) magnétique(s). Elle concerne également la cartouche pour cette mémoire.

Les mémoires à disques magnétiques sont de plus en plus fréquemment utilisées en raison de leur capacité de stockage et du temps relativement court mis par les têtes magnétiques d'écriture/lecture à accéder à une information contenue en un point quelconque des disques à partir du moment où elles ont reçu l'ordre d'accéder à cette information.

On sait que les disques magnétiques portent des informations sur des pistes d'enregistrement concentriques circulaires dont la largeur n'excède pas quelques dizaines de microns et qui sont disposées sur leurs deux faces.

Pour permettre la lecture et l'écriture des informations, les têtes magnétiques sont disposées de chaque côté des disques à une distance de quelques dixièmes de microns de ceux-ci.

Les disques magnétiques sont entraînés par un moteur électrique à une vitesse de rotation constante. Dans la pratique courante, et plus particulièrement dans le cas des mémoires qui comportent un nombre limité de disques (un ou deux disques), ces mémoires ayant une relativement faible capacité de stockage (de l'ordre d'une dizaine à quelques dizaines de millions d'octets, l'octet étant composé de huit bits, un bit étant l'unité d'information binaire égale à un ou zéro, et toute matérialisation de ce chiffre, par exemple sous forme d'enregistrement magnétique), au moins l'un de ces disques est contenu dans une cartouche amovible. Une mémoire à disques ne contient généralement qu'une seule cartouche amovible qui est remplacée par une autre dès que les opérations de lecture et /ou d'écriture concernant le disque qu'elle contient sont terminées. On voit ainsi,qu'à une même mémoire à disques magnétioues, peut être associée une pluralité de cartouches amovibles contenant chacune un disque magnétique.

Dans le cas où la mémoire à disques comporte deux disques magnétiques, l'un de ceux-ci est non amovible et reste en permanence à l'intérieur de la mémoire à disques, (l'autre étant contenu dans la cartouche amovible).

On connait des cartouches pour disque magnétique amovible, dont la formé et les dimensions normalisées assurent l'interchangéabilité, et dont la manipulation, lors de leur mise en place dans la mémoire à disques, est extrêmement simple. Elles permettent de plus au disque de ne pas être contaminé par des poussières et particules quelconques lors des périodes de repos, c'est-à-dire lés périodes où la cartouche est stockée dans des locaux appropriés extérieurs à la mémoire à disques magnétiques. En fonctionnement elles permettent, une ventilation du disque permettant de maintenir celui-ci dans une parfaite propreté, ce qui accroît la fiabilité de lecture des informations contenues sur celui-ci.

Une telle cartouche pour disque magnétique amovible est décrite et revendiquée par exemple, dans le brevet français N° 2.337.396 déposé par la Compagnie Honeywell Bull le 31 Décembre 1975 sous le titre "Conditionnement pour disque magnétique."

Une telle cartouche comprend un disque magnétique amovible rigide de faible diamètre. Elle est relativement plate (sa hauteur est plus de 10 fois inférieure à sa longueur ou sa largeur) et peut être insérée dans un logement adéquat d'une mémoire à disques. Elle est pourvue d'ouvertures qui sont fermées pendant les périodes de repos de la cartouche et ouvertes lorsque la cartouche est insérée dans la mémoire à disques, de manière à permettre le passage des têtes magnétiques d'écriture / lecture et le déplacement de celles-ci par rapport aux différentes pistes d'enregistrement. Cette cartouche comprend des moyens permettant de coupler le moyeu du disque à des moyens d'entraînement en rotation (qui sont le plus souvent constitués d'un moteur électrique).

Cette cartouche est caractérisée en ce que ses parois opposées sont rigides mais élastiquement déformables et bombées vers l'extérieur à l'état libre. La première paroi comporte en son centre une saillie intérieure formant une portée annulaire en regard de sa face interne et la seconde comporte une ouverture coaxiale bordée par une portée annulaire sur sa face externe. Le moyeu du disque est annulaire et porte deux collets intérieur et extérieur respectivement disposés pour engager les dites portées, mais qui sont axialement espacés d'une moindre distance que ces dernières à l'état libre, de sorte qu'au repos les parois aplaties de la cartouche assurent par rappel élastique le maintien mécanique du disque. Sa libération en service, c'est-à-dire lors de son utilisation dans la mémoire à disque, peut être obtenue par simple rapprochement des dites parois.

Les portées et les collets sont agencés de façon à assurer au repos, la fermeture étanche de la cartouche, de sorte que le moyeu du disque et le disque lui-même sont protégés des poussières.

En choisissant de manière appropriée la disposition relative des collets et leur diamètre respectif, l'autoventilation du disque en service peut être assurée par l'effet centrifuge de l'air sur les deux faces du disque, ce qui permet d'une part le nettoyage de celui-ci de poussières et particules parasites et d'autre part, son refroidissement.

Ainsi qu'il a été décrit dans la demande de brevet 78.29847 déposée le 19 Octobre 1975 par la Compagnie Demanderesse sous le titre " Mode d'écriture d'informations sur un support d'enregistrement magnétique", les informations sont écrites sur les disques contenus dans les cartouches amovibles de la manière suivante; elles sont réparties à l'intérieur de secteurs circulaires égaux et adjacents une face du disque étant divisée habituellement en plusieurs dizaines de secteurs. Chaque secteur est divisé en deux aires inégales dont la plus grande comprend les données destinées à être traitées par le système de traitement de l'information auquel appartient la mémoire à disques contenant la cartouche, et l'aire la plus petite comprend des informations de repérage des pistes, informations des-tinées à être utilisées par le dispositif permettant de positionner les têtes magnétiques d'écriture et de lecture en regard des pistes du disque. Pour chaque secteur l'aire la plus petite est divisée en plusieurs zones appelées zones de référence, en nombre égal à celui des pistes chaque piste étant associée à une seule et même zone.

Il est rappelé que l'on désigne sous le nom de densité longitidinale des informations (ou encore densité linéique) le nombre d'informations par unité de longueur mesurée suivant la circonférence d'une piste du disque, et que l'on désigne sous le nom de densité radiale, le nombre de pistes par unité de longueur mesurée suivant le diamètre du disque.

La tendance actuelle du développement des mémoires à disques magnétiques est notamment d'accroître sensiblement les densités radiale et longitudinale de manière à atteindre des densités radiales de l'ordre de 150 à 400 pistes par centimètre (soit 850 à 1000 pistes par pouce: on dit encore 950 à 1000 TPI), les densités linéiques atteintes étant de l'ordre de 2000 bits par centimètre ou encore 5000 bits par pouce (on dit encore 5000 bpi).

On montre qu'il est difficile d'obtenir pour les disques magnétiques amovibles contenus dans les cartouches, les mémes densités longitudinale et radiale que celles d'un disque non amovible qui reste en permanence à l'intérieur d'une mémoire à disques. En effet, l'amovibilité d'un disque magnétique intervient comme un facteur de limitatation des densités longitudinale et radiale, en raison du fait, notamment qu'il existe toujours entre les différentes cartouches pour disque magnétique amovible associées à une même mémoire à disques, des dispersions mécaniques telles que par exemple, chaque disque présente un voile différent ou encore que le centrage du disque par rapport à l'axe du moteur d'entraînement est différent. Il en résulte qu'il y a des variations dans la position occupée par les têtes magnétiques d'écriture/lecture par rapport à la couche magnétique du disque, se traduisant par des variations de distances entre les têtes et la couche magnétique, ce qui entraîne des variations d'intensité du signal électrique délivré par ces têtes d'écriture/lecture pouvant entraîner un certain nombre d'erreurs.

Un facteur de limitation supplémentaire de la possibilité d'atteindre des densités radiales (TPI) élevées, est l'existence d'un faux rond de position dû à l'accouplement entre le moyeu du disque et l'arbre du moteur d'entraînement. Ce faux rond apporte des perturbations tant au moment de l'écriture des informations de repérage des pistes dans les zones de référence qu'au moment de leur lecture. Le faux rond de position résulte des tolérances d'assemblage entre le moyeu et l'axe du moteur mais il est encore accru par les particules parasites s'insérant entre les différentes pièces d'accouplement de la cartouche et de l'axe du moteur.

On connait des systèmes de positionnement d'une pile de disques permettant de limiter ce faux rond de position.

Un tel système est par exemple décrit dans ie brevet US-A.3.615.070. Ce document montre des moyens de précentrage du moyeu porteur de la pile de disques sur les moyens d'entraînement en rotation de cette pile. Ces moyens comprennent essentiellement une pièce cylindrique appartenant au moyeu porteur de la pile de disques, et venant s'engager dans un trou cylindrique pratiqué dans le plateau d'entraînement des moyens d'entraînement en ratation, ce dernier plateau comportant en outre un anneau circulaire cylindrique dans lequel vient s'emboiter une rainure circulaire cylindrique pratiquée dans le moyeu de la pile de disques. Le système de positionnement et de centrage montrés par le document 3. 615.070 précité comprend également des moyens élastiques déformables venant en contact avec la face externe d'un cylindre de référence monté sur le plateau d'entrainement des moyens d'entrainement en rotation. Ces moyens élastiques déformables permettent un centrage plus fin du moyeu de la pile de disques par rapport à l'axe de rotation de l'ensemble constitué par la pile de disques et le plateau d'entraînement des moyens d'entraînement en rotation.

Un autre système de positionnement et de centrage d'une pile de disques sur le plateau d'entraînement de moyens d'entraînement en rotation de cette pile est décrit dans le document US -A- 3.938.192. Ce document montre également des moyens de précentrage du moyeu constitué par une pièce annulaire cylindrique appartenant au plateau d'entraînement des moyens d'entraînement en rotation dans laquelle vient s'emboîter une rainure circulaire cylindrique du moyeu de la pile de disques. Ce document montre également des moyens élastiques venant en contact avec la face externe d'un cylindre de référence appartenant au plateau d'entraînement pour un centrage fin du moyeu de la pile de disques par rapport à l'axe de rotation de l'ensemble constitué par le moyeu de la pile et le plateau d'entraînement.

Le document allemand DE-B-1 155 614 décrit également des moyens de centrage d'un moyeu portant un support d'enregistrement magnétique sur le plateau d'entraînement de moyens d'entraînement en rotation. Ces moyens de centrage sont constitués d'une part par un évidement conique pratiqué dans le plateau d'entraînement et d'autre part par une pièce conique appartenant au moyeu portant le disque, pièce conique venant s'emboîter dans l'évidement conique. Ce document allemand décrit également des moyens de transmission d'une force de verrouillage permettant un meilleur accouplement entre la partie conique du moyeu du disque et l'évidement conique du plateau d'entraînement. Ces moyens de transmission sont constitués par l'association d'une bille et d'un ressort.

Le document US-A. 3.304.544 décrit des moyens de centrage du moyeu d'une pile de disques sur le plateau d'entraînement de moyens d'entraînement en rotation. Ces moyens de centrage sont constitués d'une part par une bille solidaire du moyeu portant le disque et par un évidement conique pratiqué dans le plateau d'entraînement. La bille vient s'insérer dans l'évidement conique lors de la mise en place du moyeu portant le disque sur le plateau d'entraînement.

Il en résulte que pour obtenir des densités longitudinale et radiale aussi élevées pour les disques amovibles que celles obtenues sur les disques non amovibles, il faut donc obtenir:
- une amélioration des tolérances d'accouplement m451caniques, en réduisant notamment le faux rond de position à trois ou quatre microns, amélioration qu'il est difficile d'obtenir avec des cartouches et des systèmes de positionnement et de centrage de piles de disques tels que celles décrites dans le brevet N° 2.337.396 précité aussi que dans les brevets US-A-3 615 070, US-A-3 938 192, US-A-3 304 544 et DE-B-1 155 614. La cartouche pour disque(s) magnétique(s) amovible(s) selon l'invention a pour but d'améliorer sensiblement les tolérances d'accouplement mécaniques entre le disque magnétique et les moyens d'entraînement en rotation de celui-ci. Ceci est obtenu en munissant le moyeu de la cartouche d'une rondelle élastique déformable qui, sous l'effet d'une force de verrouillage normale au plan du disque, se déforme et vient exercer d'une part, une pression normale à la face interne d'un cylindre de référence appartenant aux moyens d'entraînement en rotation du disque, et d'autre part une pression normale à un plan de référence appartenant à ces mêmes moyens en rotation. On assure ainsi simultanément l'accouplement mécanique par adhérence entre le moyeu du disque et les moyens d'entraînement en rotation, et un centra extrêmement précis de l'axe de rotation du disque magnétique à plus ou moins cinq microns près (10 microns crête-crête).

Selon l'invention, la mémoire à disques incluant une cartouche amovible pour disque(s) magnetique(s) insérée dans un logement approprié de celle-ci, constituée d'un enveloppe à l'intérieur de laquelle est placé le(s) disque(s), cette cartouche étant munie d'ouvertures permettant le passage de têtes de lecture/écriture des informations contenues sur le disque et d'un dispositif permettant d'obturer ces ouvertures lorsque la cartouche est au repos, le moyeu du disque comportant des moyens d'accouplement de celui-ci à des moyens d'entraînement en rotation de la mémoire, ces derniers comportant un plan et un cylindre de référence, le moyeu comportant:
- des moyens cylindriques en contact avec le plan de référence pour précentrer le moyeu sur l'axe de rotation des moyens d'entraînement,
- des moyens élastiques déformables en contact avec un cylindre de référence pour un centrage fin du moyeu par rapport à cet axe de rotation,
est caractérisée en ce que les moyens élastiques déformables sont constitués par une rondelle montée et centrée sur le moyeu, en contact avec le plan de référence et venant se placer à l'intérieur du cylindre de référence, la mémoire à disques comprenant des moyens coopérant avec l'enveloppe pour transmettre au moyeu et a la rondelle une force de verrouillage de la cartouche normale au plan du disque qui déforme la rondelle de telle sorte que celle-ci exerce d'une part une pression normale au plan de référence et d'autre part une pression normale à la face du cylindre de référence.

L'invention concerne également une cartouche amovible pour disque(s) magnétique(s) destinée à être insérée dans un logement approprié de la mémoire à disques décrite ci-dessus, à l'intérieur de laquelle est placé le(s) disque(s), cette cartouche étant munie d'ouvertures permettant le passage de têtes de lecture/écriture des informations contenues sur le disque et d'un dispositif permettant d'obturer ces ouvertures lorsque la cartouche est au repos, son moyeu comportant:
- des moyens cyclindriques en contact avec le plan de référence pour précentrer le moyeu sur l'axe de rotation des moyens d'entraînement,
- des moyens élastiques déformables en contact avec le cyclindre de référence de ces mêmes moyens d'entraînement pour un centrage du moyeu par rapport audit axe de rotation,
qui est caractérisée en ce que les moyens élastiques déformables sont constitués par une rondelle montée et centrée sur le moyeu, en contact avec le plan de référence et venant se placer à l'intérieur du cylindre de référence, l'enveloppe de la cartouche coopérant avec des moyens pour transmettre au moyeu et à la rondelle une force de verrouillage normale au plan du disque qui déforme la rondelle de telle sorte que celle-ci exerce d'une part une pression normale au plan de référence et d'autre part une pression normale à la face du cylindre de référence.

D'autres caractéristiques et avantages de l'invention apparaîtront dans la description suivante donnée à titre d'exemple non limitatif et en se référant aux dessins annexés.

Sur ces dessins:
- **Les figures 1, 2, 3:** rappellent comment est constituée une cartouche pour disque(s) magnétique(s) amovible(s) selon l'art antérieur;
- **La figure 4:** est une vue de trois-quarts en perspective montrant d'une part la silhouette générale extérieure de la cartouche selon l'invention, et d'autre part le bâti de la mémoire à disques à laquelle est associée la cartouche;

- Les figures 5 et 6: sont des vues en coupe transversale prises normalement au plan du disque définissant le principe de la cartouche selon l'invention,

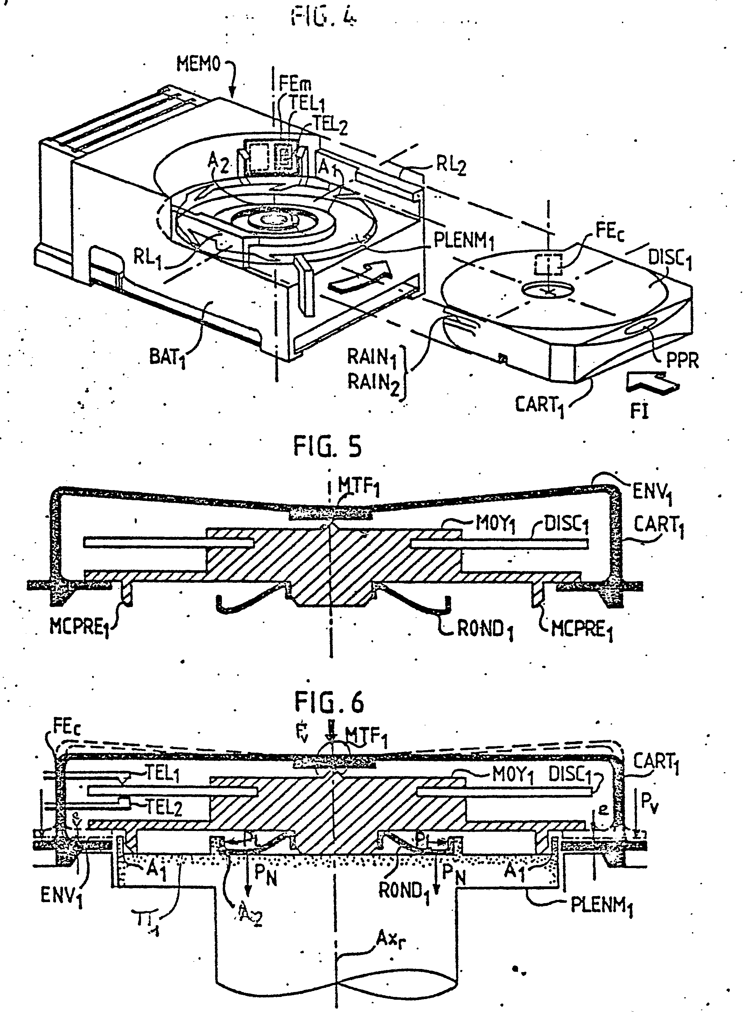

- La figure 5 montrant la cartouche au repos (c'est-à dire hors service, à l'extérieur de la mémoire à disques);

- La figure 6 montrant la cartouche en position de fonctionnement à l'intérieur de la mémoire à disques.

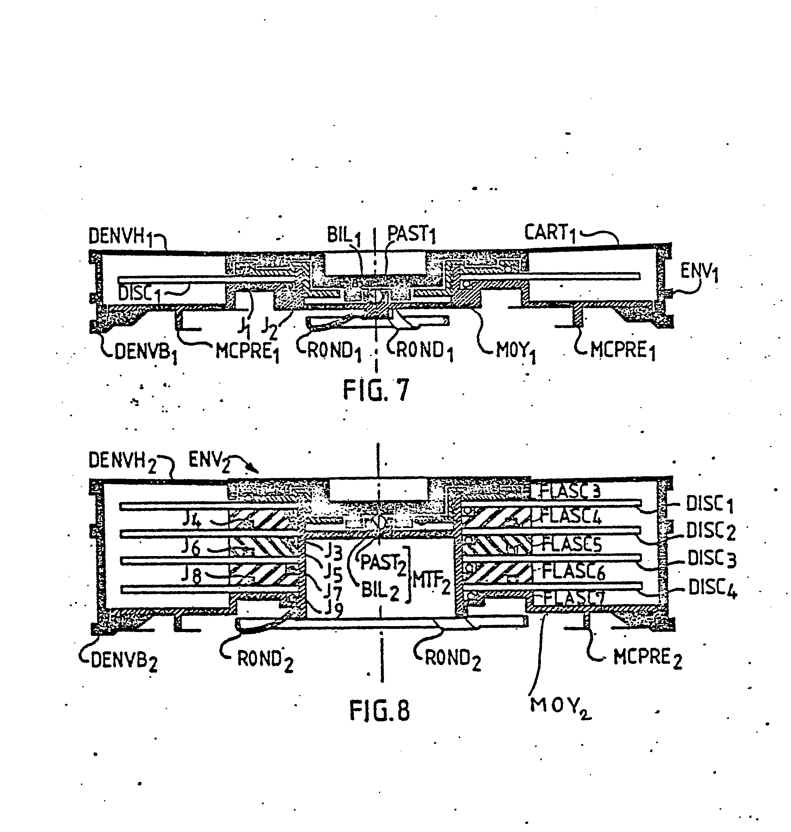

- La figure 7: est une vue en coupe transversale normale au plan du disque d'un premier mode de réalisation préféré de la cartouche, ne comportant qu'un seul disque amovible.

- La figure 8: est une vue en coupe transversale normale au plan du disque montrant un second mode de réalisation préféré de la cartouche comprenant quatre disques amovibles;

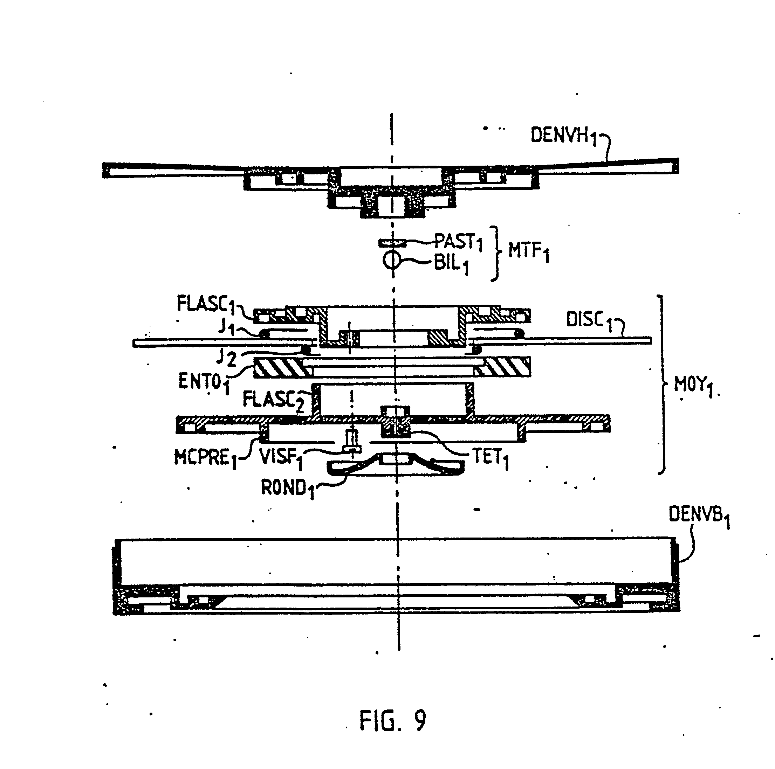

- La figure 9: est une vue éclatée en coupe transversale normale au plan du disque de la cartouche représentée à la figure 7;

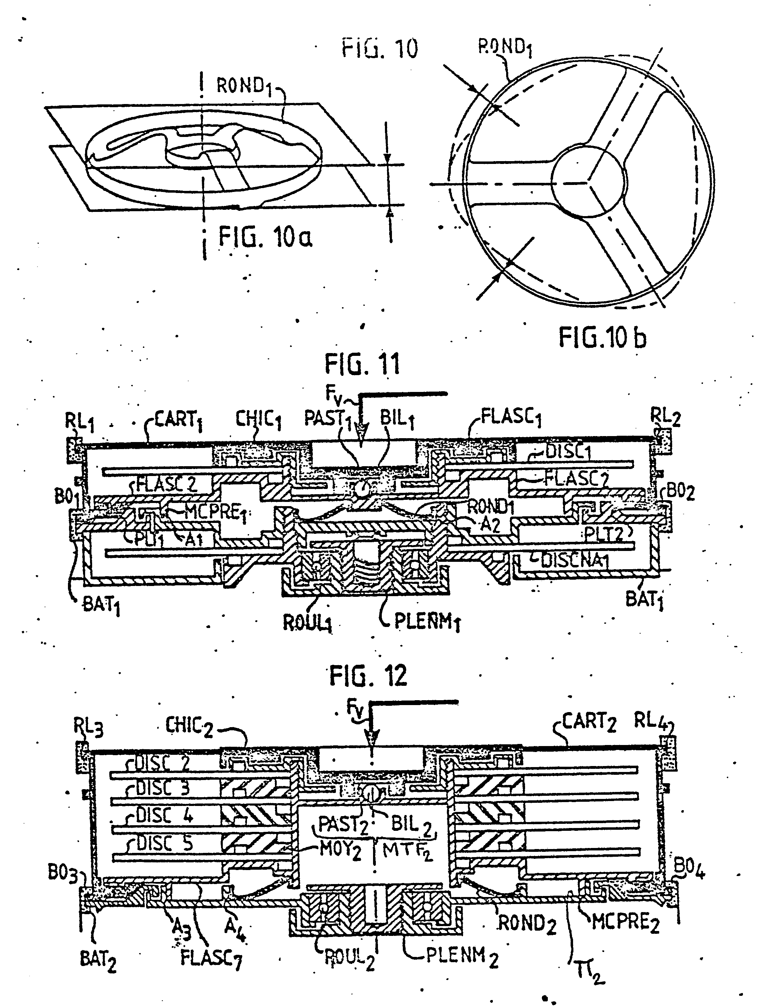

- La figure 10: composée des figures 10a et 10b montre la rondelle élastique déformable dont est muni le moyeu de la cartouche;

- La figure 11: est une vue en coupe transversale normale au plan du disque montrant une cartouche contenant un seul disque amovible, selon l'invention, montrée dans la position qu'elle occupe lorsqu'elle est disposée à l'intérieur de la mémoire à laquelle elle est associée.

- La figure 12: est une vue en coupe transversale normale au plan du disque montrant une cartouche selon l'invention, contenant quatre disques amovibles, dans la position qu'elle occupe lorsqu' elle est disposée à l'intérieur de la mémoire à disques à laquelle elle est associée;

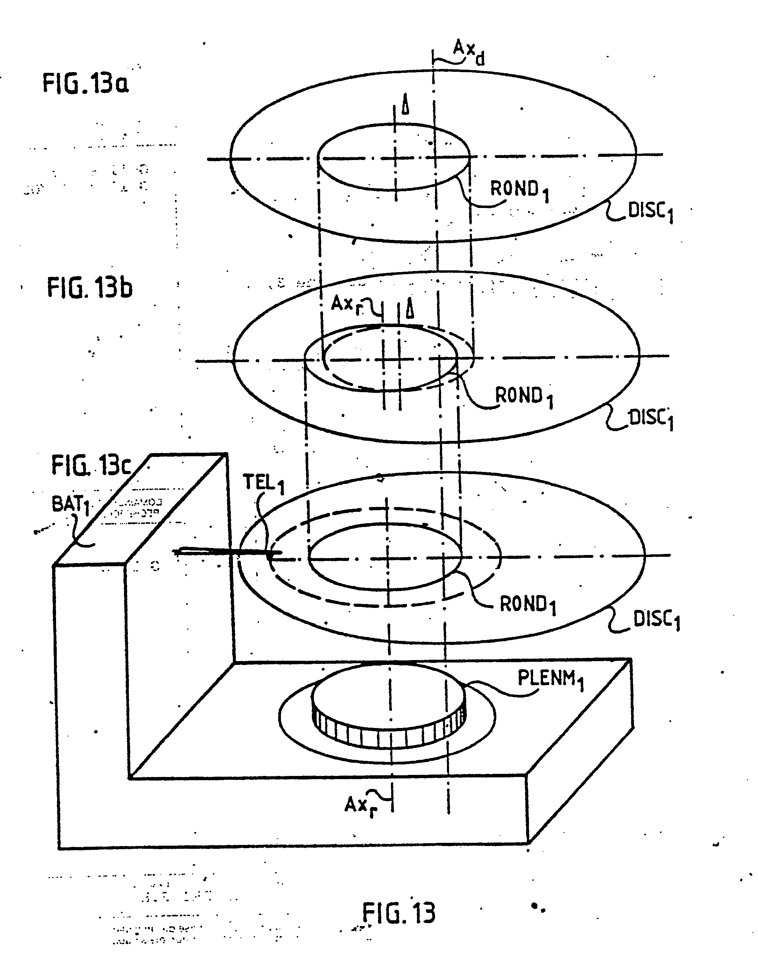

- La figure 13: illustre le principe de fonctionnement de la cartouche selon l'invention et montre la précision du centrage de l'axe de rotation du moyeu du disque.

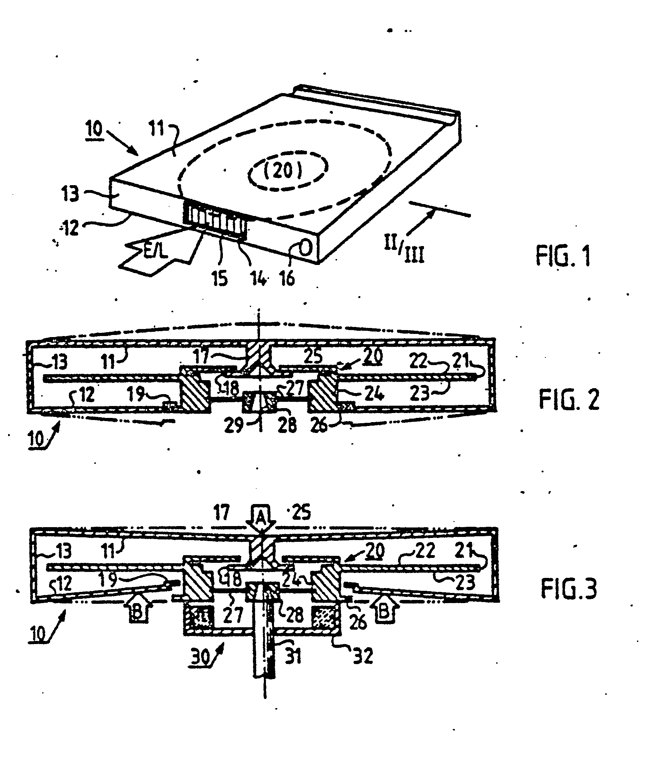

Afin de mieux comprendre les principes de constitution et de fonctionnement de la cartouche pour disque(s) amovible(s) magnétique(s) selon l'invention, il est utile de faire quelques rappels illustrés par les figures 1, 2, 3 sur la constitution et le principe de fonctionnement des cartouches pour disque(s) magnétique(s) amovible(s) selon l'art antérieur.

Une telle cartouche selon l'art antérieur est par exemple décrite dans le brevet français N° 2.337.396 précité.

La figure 1 montre la cartouche 10 qui se présente sous la forme d'un boîtier plat du contour carré dans laquelle est enfermé le disque magnétique 20. L'une des faces latérales de la cartouche comporte une fenêtre 14 qui est obturée lorsque la cartouche est au repos (c'est-à-dire lorsqu'elle n'est pas insérée dans la mémoire à disques à laquelle elle est associée) par un volet 15. Ce dernier, est manoeuvré par un mécanisme intérieur inviolable, lors de l'introduction de la cartouche dans la mémoire à disques magnétique de manière, à ce que la fenêtre ne soit plus obturée.

Dès que le volet 15 est retiré, les têtes magnétiques d'écriture/lecture E/L symbolisées par une flèche à la figure 1 peuvent être introduites à l'intérieur de la cartouche pour y lire les données contenues sur les deux faces du disque magnétique 20.

La cartouche 10 est réalisée par un assemblage de plusieurs pièces en matériau rigide mais élastiquement déformable. A la figure 1, on a désigné par 11 et 12 les grandes parois opposées de la cartouche et par 13 la paroi latérale qui contient la fenêtre 14.

La figure 2 montre la cartouche telle qu'elle se présente pendant ses périodes de repos à l'extérieur de la mémoire à disques, périodes se situant entre deux utilisations successives à l'intérieur de celle-ci. Cette figure montre que la paroi supérieure 11 comporte en son centre une saillie intérieure 17 terminée par un collet extérieur 18 dit "anneau d'extraction" formant une portée annulaire en regard de la face interne de ladite paroi. Disposée de manière coaxiale à cette saillie, la paroi opposée 12 comporte une ouverture bordée sur sa face externe par une portée annulaire 19.

Le disque 20 comprend essentiellement une âme annulaire plate 21 dont les deux faces 22 et 23 sont recouvertes d'une couche magnétique d'enregistrement, et un moyeu annulaire 24 dont les extrémités axialement opposées portent respectivement un collet intérieur 25 engageant la portée du collet 18 et un collet extérieur 26 engageant la portée 19 qui borde l'ouverture de la paroi 12. Dans le passage axial du moyeu 24 est rapporté un diaphragme 27 en étoiles ou percé d'ouïes, qui porte une baque de centrage 28 à trous coniques 29.

Les parois opposées 11 et 12 de la cartouche sont maintenues sensiblement planes et parallèle (comme indiqué en traits pleins) alors que par construction, elles tendent à prendre du fait de leur élasticité, la forme bombée vers l'extérieur montrée en traits mixtes. Il s'en suit l'existence d'une d'une force axiale de rappel élastique exercée sur ces parois 11 et 12 que assure le maintien en place du disque 20 dans la cartouche 10 lors des périodes de repos (de stockage) et l'étanchéité des jonctions entre les collets 25 et 26 et les portées 18 et 19.

La figure 3 montre la position occupée par le disque 20 à l'intérieur de la cartouche 10 lorsque celle-ci est insérée à l'intérieur de la mémoire à disques à laquelle elle est associée. Les parois 11 et 12 sont alors rapprochées (comparer les tracés en traits mixtes qui montrent la position occupée par les parois lors du stockage et en traits pleins lors de l'insertion dans la mémoire à disques). Il s'en suit que les collets 25 et 26 du moyeu du disque 20 sont dégagés des portées 18 et 19 de la cartouche 10 ce qui permet l'entraînement en rotation du disque et le nettoyage et la ventilation de celui-ci.

L'entraînement du disque est assuré par couplage entre son moyeu 24 et un ensemble moteur (de préférence le moteur peut être un moteur électrique) 30 comprenant un arbre 31 à tête conique qui s'engage dans la bague de centrage 28 et un plateau 32 engageant le collet 26 ou l'extrémité correspondante du moyeu. Ce plateau étant ajouré et pourvu de moyens assurant le couplage magnétique, entre le moyeu et les moyens d'entraînement du disque.

On voit que l'axe de rotation du disque 20 est défini par l'axe de rotation des moyens d'entraînement, à savoir l'axe de symétrie de l'arbre 31. Il en résulte les conséquences suivantes:

Généralement, les informations de repérage des pistes qui sont contenues dans les zones de référence associées à chacune des pistes et ce pour chacun des secteurs contenus sur le disque magnétique 20, sont écrites au moyen d'une mémoire à disques spéciale appelée "formatteur". L'axe de rotation du disque magnétique 20 lors de ses opérations d'écriture des informations de repérage des pistes, est défini par l'axe de symétrie de l'arbre d'entraînement de ce formateur. Par contre l'axe de rotation du disque 20 lors des opérations de lecture, est défini par l'axe de symétrie de l'arbre d'entraînement de la mémoire à disques dans laquelle est insérée la cartouche 10. En raison des tolérances d'accouplement mécaniques entre l'arbre d'entraînement 31, soit du formateur soit de la mémoire à disques dans laquelle est insérée la cartouche, et la bague de centrage 28 à trous coniques 29, on voit que les axes de rotation du disque à l'écriture et à la lecture ne coïncident pas et peuvent être distants de plusieurs microns de ce qui correspond aux tolérances d'accouplement mécaniques. Lorsque l'on cherche à atteindre des densités radiales de l'ordre de quelques centaines de pistes par centimètre, la dimension des pistes est de lordre de celle qui sépare les axes de symétrie du disque à la lecture et à l'écriture ce qui peut provoquer des erreurs de lecture dés informations de repérage des pistes et par conséquent des erreurs dans le positionnement des têtes magnétiques au-dessus des pistes du disque, erreurs qu'on ne peut corriger totalement avec les dispositifs d'asservissement en position des têtes de lecture/écriture en regard des pistes du disque, utilisés habituellement.

La cartouche selon l'invention permet de remédier à ces inconvénients.

Une telle cartouche CART$_1$ contenant un seul disque amovible est représentée vue de trois-quart en perspective à la figure 4. Cette cartouche est destinée à être insérée dans le réceptacle d'une mémoire à disques MEMO$_1$, dont le bâti est désigné par BAT$_1$:

La cartouche CART$_1$ comprend une poignée de préhension PPR qui permet de faciliter sa manutention par l'opérateur chargé de l'introduire dans le réceptacle de la mémoire à disques. Elle comporte un disque amovible DISC$_1$. Sur ses parois latérales elle comporte deux rainures RAIN$_1$ et RAIN$_2$ permettant de la guider sur deux rails longitudinaux RL$_1$ et RL$_2$ appartement au réceptacle du bâti de la mémoire à disques MEMO$_1$. Le sens d'introduction de la cartouche est indiqué par la flèche FI.

Cette cartouche comprend une fenêtre FE$_C$ (représentée en traits interrompus à la figure 4 par où peuvent être introduites des têtes magnétiques d'écriture /lecture telles que TEL$_1$ et TEL$_2$ dont on a représenté symboliquement la face avant sur le bâti BAT$_1$ de la mémoire à disques MEMO. Lorsque la cartouche est introduite dans le réceptacle de la mémoire à disques, la fenêtre FE$_C$ se trouve disposée en regard d'une fenêtre FE$_m$ du bâti BAT. Lorsque la cartouche n'est pas introduite dans la mémoire à disques MEMO$_1$, la fenêtre FE$_m$ est normalement obturée par un rideau-fenêtre non représenté pour simplifier a la figure 4. Il en est de même pour la cartouche CART$_1$, où la fenêtre FE$_c$ est normalement fermée par un rideau-fenêtre coulissant à l'intérieur de la cartouche et non représenté pour simplifier à la figure 4.

Lorsque la mémoire à disques MEMO$_1$ ne contient pas la cartouche CART$_1$, les deux têtes magnétiques TEL$_1$ et TEL$_2$ sont disposées à l'intérieur d'une enceinte particulière du bâti BAT$_1$ obturée par le rideau-fenêtre qui ferme la fenêtre FE$_m$.

On a représenté à la figure 4 une partie des moyens d'entraînement en rotation du disque DISC$_1$ de la cartouche CART$_1$. Cette partie est constituée par un plateau d'entraînement PLENM$_1$ solidaire de l'axe d'un moteur électrique (non représenté pour simplifier à la figure 4), ce plateau d'entraînement comportant un plan dit de référence (voir également figure 6), un premier cylindre A$_1$, et un cylindre de référence A$_2$ centrique au précédent et de diamètre plus faible. La raison de la présence de ces deux cylindres A$_1$ et sera explicitée plus loin.

La mémoire à disques MEMO$_1$ comprend également un disque magnétique non amovible, restant en permanence à l'interieur du bâti BAT$_1$ et non représenté pour simplifier à la figure 4. Ce disque non amovible est entraîné par le même moteur électrique que le disque DISC$_1$ de la cartouche CART$_1$.

On se reporte désormais à la figure 5 et à la figure 6, qui montrent respectivement la cartouche CART$_1$ au repos et dans la position qu'elle occupe lorsqu'elle est insérée dans la mémoire à disques MEMO$_1$, le disque DISC$_1$ étant entraîné en rotation par des moyens d'entraînement en rotation dont on n'a représenté que le plateau d'entraînement PLENM$_1$ à la figure 6.

La cartouche CART$_1$ comporte:
- une enveloppe ENV$_1$ réalisée en une matière plastique déformable,
- le disque DISC$_1$ muni de son moyeu MOY$_1$,
- des moyens cylindriques de pré-centrage MCPRE$_1$ destinés à effectuer un pré-centrage

grossier du moyeu $MOY_1$ par rapport à l'axe de rotation $Ax_r$ du plateau d'entraînement $PLENM_1$,

- une rondelle élastique déformable ROND montée sur le moyeu $MOY_1$, constituant des moyens élastiques déformables de centrage fin du moyeu $MOY_1$ par rapport à l'axe de rotation $Ax_r$,

- des moyens $MTF_1$ solidaires de l'enveloppe $ENV_1$ pour transmettre au moyeu et aux moyens élastiques $ROND_1$, une force de verrouillage $F_v$ de la cartouche, normale au plan du disque.

On a fait figurer, sur la figure, les deux têtes magnétiques d'écriture - lecture $TEL_1$ - $TEL_2$ passant par la fenêtre $FE_c$ qui n'est plus obturée par son rideau fenêtre lorsque la cartouche $CART_1$ est insérée dans la mémoire $MEMO_1$.

Le fonctionnement de la cartouche comporte les opérations suivantes:

a) introduction de la cartouche dans le réceptable du bâti $BAT_1$ de la mémoire MEMO. Durant cette opération, la cartouche $CART_1$ est guidée sur les deux rails longitudinaux $RL_1$ et $RL_2$.

b) verrouillage de la cartouche effectué à l'aide d'un levier extérieur à la cartouche (appartenant à la mémoire à disques $MEMO_1$ et non représenté) solidaire d'une virole à crans hélicoïdaux appartenant également au bâti $BAT_1$ et de la mémoire à disques. Dans cette opération, plusieurs phases successives s'effectuent simultanément:

-1. Une descente verticale de la cartouche sur une distance de quelques millimètres environ (de l'ordre de quatre millimètres

-2. Un pré-centrage grossier du moyeu $MOY_1$ du disque $DISC_1$ à l'intérieur du cylindre $A_1$. Ce pré-centrage permet à la cartouche de trouver relativement aisément une position correcte lors de sa mise en place de cette cartouche dans le réceptacle. Ce pré-centrage grossier est effectué grâce aux moyens de pré-centrage $MCPRE_1$ du moyeu $MOY_1$. De préférence ces moyens de pré-centrage sont constitués, ainsi qu'on peut le voir aux figures 5 et 6 par un cylindre. Ce cylindre vient lors du verrouillage de la cartouche, se placer à l'intérieur du cylindre $A_1$, en même temps qu'il vient en contact avec le plant $\Pi_1$ de référence du plateau $PLENM_1$

-3. Centrage de précision du moyeu $MOY_1$ grâce à la rondelle $ROND_1$ qui vient à l'intérieur du cylindre $A_2$. Ce centrage de précision a lieu selon le processus suivant. La virole (non représentée) vient exercer une pression $P_v$(voir figure 6) uniforme sur la périphérie de l'enveloppe. Cela entraine une déformation de l'enveloppe $ENV_1$, due à son élasticité. Cette pression a pour effet:

- d'une part, par la déformation de l'enveloppe de transmettre à la rondelle $ROND_1$, par l'intermédiaire des moyens de transmission $MTF_1$ et du moyeu $MOY_1$, une force de verrouillage $F_v$ à la rondelle $ROND_1$. La rondelle $ROND_1$ est alors déformée. Alors que, en l'absence de force de verrouillage $F_v$, la rondelle $ROND_1$ a un diamètre tel qu'il existe un jeu de 20 à 25 microns entre la rondelle et la paroi interne du cylindre $A_2$ l'action

de la force de verrouillage $F_v$ a pour résultat d'accroître légèrement le diamètre de la rondelle de façon que la périphérie de celle-ci vienne en contact avec les parois internes du cylindre et exercer sur celui-ci une pression latérale $P_1$ normale aux parois.

En outre, l'action de la force de verrouillage sur la rondelle $ROND_1$, a pour effet d'aplatir celle-ci de façon qu'elle vienne en contact avec le plan $\Pi_1$ de référence en y exerçant une pression normale à celui-ci, pression désignée par $P_N$. Il est clair qu'à partir du moment où la rondelle exerce cette pression, les moyens de centrage grossier $MCPRE_1$ exercent également cette pression $P_N$ sur le plan $\Pi_1$ de référence. Ainsi, la force de verrouillage a pour effet non seulement d'assurer un centrage parfait (à quelques microns près) du moyeu $MOY_1$ par rapport à l'axe de rotation $Ax_r$ du plateau d'entraînement PLENR, mais aussi un couplage efficace entre ce moyeu et le plateau, couplage obtenu par adhérence entre les moyens $MCPRE_1$ et la rondelle $ROND_1$ d'une part et le plan $\Pi_1$ et, le cylindre de référence $A_2$ d'autre part.

-c) Il y a désolidarisation de l'enveloppe $ENV_1$ de la cartouche et du moyeu $MOY_1$ portant le disques $DISC_1$. Cette désolidarisation se traduit par le fait qu'une ouverture se créée sous la face inférieure du moyeu $MOY_1$:voir figure 6 où on voit qu'il existe un espace entre la face inférieure du moyeu $MOY_1$ et l'enveloppe $ENV_1$ de la cartouche, espace de hauteur e.

-d) ouverture de la fenêtre $FE_c$ de manière à permettre le passage des têtes $TEL_1$ et $TEL_2$ associées à chacune des faces du disque $DISC_1$.

-e) entraînement en rotation du disque $DISC_1$ par le plateau PLENM.

On considère les figures 7, 9 et 10 qui représentent de façon plus détaillée qu'aux figures 4 et 5, un mode de réalisation préféré d'une cartouche $CART_1$ selon l'invention comportant un seul disque $DISC_1$. Le principe de fonctionnement de la cartouche représentée aux figures 7 et 9 est celui décrit plus haut.

Cette cartouche $CART_1$ comprend une enveloppe $ENV_1$ composée de deux demi-enveloppes à savoir la demi-enveloppe $DENVH_1$, (demi-enveloppe haute de la cartouche), et la demi-enveloppe $DENVB_1$, (la demi-enveloppe basse de la cartouche).

Les moyens $MTF_1$ sont composés d'une pastille $PAST_1$ et d'une bille $BIL_1$.

Le moyeu $MOY_1$ comprend deux flasques $FLASC_1$ et $FLASC_2$, une entre-toise $ENTO_1$, le disque $DISC_1$ étant pincé entre les flasques $FLASC_1$ et $FLASC_2$ et l'entre-toise $ENTO_1$ par l'intermédiaire des joints caoutchoutés $J_1$ et $J_2$ qui ont pour rôle d'éviter les micro-glissements du disque dûes aux vibrations parasites. Le flasque $FLASC_2$ comprend les moyens de pré-centrage $MCPRE_1$. L'ensemble constitué par les deux flasques, l'entre-toise et le disque est assemblé au moyen de vis d'assemblage tel que $VISF_1$(il peut y avoir une ou plusieurs vis).

La rondelle déformable $ROND_1$ est montée

serrée sur le teton TET du flasque FLASC$_1$. La rondelle ROND$_1$ peut être du type de celui représenté aux figures 10a et 10b.

On a vu que cette rondelle se déforme lorsque le moyeu MOY$_1$ du disque DISC$_1$ est accouplé, par adhérence, au plateau d'entraînement PLENM$_1$. Du fait que la cartouche CART$_1$ peut être utilisée un grand nombre de fois par la même mémoire à disques MEMO$_1$, il est clair que les propriétés physiques de la rondelle doivent lui permettre, après chaque déformation de retrouver sa forme initiale. On admet que la rondelle retrouve, en passant d'une opération d'insertion à une autre, la même déformation à dix microns près. L'épaisseur de la rondelle ROND$_1$ est calculée de telle sorte qu'il y ait adéquation entre le contact de la rondelle avec le plan $\Pi_1$ de référence et le rattrapage du jeu à l'intérieur du cylindre de référence A$_2$ (rattrapage de jeu qui, ainsi qu'il a été décrit plus haut est de l'ordre d'une vingtaine de microns). En d'autres termes, il est exigé de cette rondelle que se reproduise, d'une opération à l'autre la même déformation quel que soit le type de cette déformation.(Qui peut être symétrique, concentrique ou prendre la forme indiquée en traits interrompu; à la figure 10b).

La figure 8 représente une vue détaillée d'une cartouche CART$_2$ selon l'invention comportant quatre disques DISC$_1$ à DISC$_4$. La cartouche CART$_2$ comprend une enveloppe ENV$_2$ composée de deux demi-enveloppes à savoir DENVH$_2$ et DENVB$_2$.

Le moyeu MOY$_2$ comporte une pluralité de flasques FLASC$_3$ à FLASC$_7$, ce dernier comprenant les moyens de centrage grossier MCPRE$_2$. On voit que, une pluralité de joints sont placés entre les différents disques et les flasques. Ces joints sont désignés par J$_3$ à J$_9$.

Les moyens élastiques déformables de centrage fin, sont constitués par la rondelle ROND$_2$.

Les moyens de transmission de la force de verrouillage MTF$_2$ sont constitués par la pastille PAST$_2$ et la bille BIL$_2$.

Il est clair que le principe de constitution et le principe de fonctionnement de la cartouche CART$_2$ est strictement identique à celui de la cartouche CART$_1$.

La figure 11 est une vue détaillée de la cartouche CART$_1$ dans la position qu'elle occupe à l'intérieur du réceptacle de la mémoire à disques MEMO$_1$. On a représenté sur cette figure, une partie des moyens d'entraînement à savoir le plateau d'entraînement PLENM$_1$ muni de roulements à billes ROUL$_1$ et portant le disque non amovible DISCNA$_1$ qui reste en permanence à l'intérieur de la mémoire à disques MEMO$_1$. On a représenté la rondelle ROND$_1$ à l'intérieur de son cylindre de référence A$_2$ et les moyens de centrage grossier MCPRE$_1$ à l'intérieur du cylindre A$_1$. La cartouche CART$_1$ est montrée placée à l'intérieur des rails RL$_1$ et RL$_2$. La virole appartenant au bâti BAT$_1$ de la mémoire à disques vient exercer une pression sur les bords

BO$_1$ et BO$_2$ de la cartouche CART$_1$, pression qui s'exerce sur toute la périphérie de la cartouche en déformant l'enveloppe de telle sorte que la force de verrouillage F$_v$ s'exerce sur la cartouche par l'intermédiaire des moyens de transmission MTF$_1$ composés de la bille BIL$_1$ et de la pastille PAST$_1$.

On voit de plus que la partie inférieure de la cartouche CART$_1$, c'est-à-dire la demi-enveloppe DENVB$_1$ vient s'appuyer contre des plans inclinés PLI$_1$ et PLI$_2$ du bâti BAT$_1$.

Si l'on considère la figure 12, on voit une cartouche CART$_2$ comprenant quatre disques DISC$_1$ à DISC$_4$ disposés à l'intérieur d'une mémoire à disques MEMO$_2$ dont le bâti est BAT$_2$. Cette mémoire MEMO$_2$ ne comporte pas de disque non amovible. Elle ne travaille qu'avec les quatre disques amovibles DISC$_1$ à DISC$_4$ de la cartouche CART$_2$.

Cette cartouche est montrée placée à l'intérieur des rails RL$_3$ et RL$_4$ du bâti BAT$_2$. Sa rondelle ROND$_2$ est disposée à l'intérieur du cylindre de référence A$_3$ alors que les moyens de centrage grossier MCPRE$_2$ sont montrés disposés à l'intérieur du cylindre A$_4$. On a également représenté le plan $\Pi_2$ de référence du plateau d'entraînement PLENM$_2$ qui est muni de roulements à billes ROUL$_2$. Une virole appartenant au bâti BAT$_2$ exerce une pression sur la périphérie de la cartouche symbolisée par les bords BO$_3$ et BO$_4$, pression qui déforme la cartouche ce qui permet d'appliquer une force de verrouillage F$_v$ par l'intermédiaire des moyens de transmission MTF$_2$ composés de la bille BIL$_2$ et de la pastille PAST$_2$ au moyeu MOY$_2$.

On considère la figure 13 qui montre la précision du centrage de l'axe de rotation du moyeu du disque(des disques) obtenue par l'utilisation de la rondelle déformable, que ce soit la rondelle ROND$_1$ de la cartouche CART$_1$, ou la rondelle ROND$_2$ de la cartouche CART$_2$. Sur les trois figures 13a,13b et 13c qui composent la figure 13, on a représenté le disque DISC$_1$ dont l'axe de symétrie est désigné par Ax$_d$ et la rondelle ROND$_1$ symbolisée par la circonférence (la section du cylindre) extérieur faisant partie de la rondelle) de son cylindre extérier qui vient en contact avec le cylindre de référence A$_2$ (voir figures 7 à 12).

On considére la figure 13a qui montre le disque et la rondelle dans la position qu'ils occupent lorsque la cartouche est en dehors de la mémoire à disques MEMO$_1$ ou MEMO$_2$. L'axe de symétrie de la rondelle est alors indiqué par $\Delta$ et généralement il ne coïncide pas avec l'axe Ax$_d$ de symétrie du disque DISC$_1$. La distance entre l'axe $\Delta$ et l'axe Ax$_d$ est de l'ordre de quelques microns. En d'autres termes, la rondelle ROND$_1$ est toujours légèrement excentrée par rapport au disque DISC$_1$.

A la figure 13b on a supposé que la cartouche CART$_1$ (ou CART$_2$) est insérée dans le réceptacle de la mémoire à disques MEMO$_1$ et que l'accouplement entre le moyeu MOY$_1$ et les moyens d'entraînement PLENM$_1$ est réalisé. Ainsi

qu'il a été indiqué plus haut, la rondelle $ROND_1$ se déforme et vient occuper la position occupée en traits pleins sur la figure 13b, l'ancienne position occupée par la rondelle étant indiquée en traits interrompus. L'axe de symétrie de la rondelle coïncide avec l'axe de rotation des moyens d'entraînement en rotation, c'est-à-dire l'axe de rotation du plateau $PLENM_1$, (représenté de manière très schématique à la figure 13c), à savoir l'axe $Ax_r$. La distance entre les axes $\Delta$ et $Ax_r$ est de l'ordre de trois à quatre microns.

A la figure 13c, on a représenté également de façon très schématique le bâti $BAT_1$ de la mémoire à disques $MEMO_1$ et une tête de lecture-écriture $TEL_1$ disposée en regard d'une piste $P_i$ du disque $DISC_1$. On voit sur cette figure que la piste $P_i$ (pistecirculaire) est écrite en ayant pour axe de symétrie l'axe de rotation $Ax_r$ des moyens d'entraînement $PLENM_1$ et de la rondelle $ROND_1$. L'axe de symétrie de la piste écrite $P_i$ ne coïncide donc pas avec l'axe $Ax_d$ de symétrie du disque $DISC_1$. Toutefois, comme il est supposé que la rondelle $ROND_1$ subit toujours la même déformation, on voit que si l'on retire la cartouche $CART_1$ de la mémoire à disques $MEMO_1$ et qu'on la réintroduit ensuite dans celle-ci la rondelle $ROND_1$ venant toujours occuper la position indiquée à la figure 13c (ou 13b) l'axe de symétrie de la piste $P_i$ sera toujours l'axe $Ax_r$. Il en résulte que la précision de lecture d'écriture sera toujours très grande puisque l'axe de la piste $P_i$ sera toujours le même. Il est évident qu'un raisonnement identique peut être fait quelque soit la mémoire à disques $MEMO_1$ et quelque soit la cartouche $CART_1$.

Ainsi qu'on peut le voir aux figures 7 à 12, les moyens d'entraînement $PLENM_1$ et $PLNME_2$ contenant des roulements à billes, les cartouches $CART_1$ et $CART_2$ comportent des chicanes $CHIC_1$ et $CHIC_2$ permettant d'éviter que les poussières de lubrifiant des roulements ne viennent polluer l'espace des cartouches $CART_1$ et $CART_2$ où sont contenus les disques $DISC_1$ et $DISC_2$ à $DISC_5$. Ces chicanes peuvent être remplacées avantageusement par des joints ferrofluidiques tels que ceux fabriqués par la société FERRO FLUIDIC S.A.

## Revendications

1. Mémoire à disques incluant une cartouche amovibile pour disque(s) magnétique(s) insérée dans un logement approprié de celle-ci, et constituée d'une enveloppe ($ENV_1$, $ENV_2$) à l'intérieur de laquelle est placé le(s) disque(s) ($DISC_1$, $DISC_2$ à $DISC_5$) et munie d'ouvertures ($FE_c$) permettant le passage de têtes de lecture/écriture ($TEL_1$, $TEL_2$) des informations contenues sur le disque ($DISC_1$) et d'un dispositif permettant d'obturer ces ouvertures lorsque la cartouche est au repos, le moyeu ($MOY_1$, $MOY_2$) du disque ($DISC_1$) comportant des moyens d'accouplement de celui-ci à des moyens d'entraînement en rotation ($PLENM_1$, $PLENM_2$) de la mémoire, ces derniers comportant un plan ($\Pi_1$, $\Pi_2$) et un cylindre ($A_2$, $A_4$) de référence, le moyeu ($MOY_1$, $MOY_2$) comportant:

- des moyens cylindriques ($MCPRE_1$, $MCPRE_2$) en contact avec le plan de référence ($\Pi_1$, $\Pi_2$) pour précentrer le moyeu sur l'axe de rotation des moyens d'entraînement,

- des moyens élastiques déformables ($ROND_1$, $ROND_2$) en contact avec un cylindre de référence ($A_2$, $A_4$) pour un centrage fin du moyeu ($MOY_1$, $MOY_2$) par rapport à cet axe de rotation,

caractérisée en ce que les moyens élastiques déformables sont constitués par une rondelle ($ROND_1$, $ROND_2$) montée et centrée sur le moyeu ($MOY_1$, $MOY_2$), en contact avec le plan de référence ($\Pi_1$, $\Pi_2$), et venant se placer à l'intérieur du cylindre de référence ($A_2$, $A_4$), la mémoire à disques comprenant des moyens ($MTF_1$, $MTF_2$) coopérant avec l'enveloppe ($ENV_1$, $ENV_2$) pour transmettre au moyeu ($MOY_1$, $MOY_2$) et à la rondelle ($ROND_1$, $ROND_2$) une force ($F_v$) de verrouillage de la cartouche normale au plan du disque qui déforme la rondelle de telle sorte que celle-ci exerce d'une part une pression normale au plan de référence ($\Pi_1$, $\Pi_2$) et d'autre part une pression normale (Pe), à la face du cylindre de référence ($A_2$, $A_4$).

2. Cartouche amovible pour disque(s) magnétique(s) destinée à être insérée dans un logement approprié de la mémoire à disques selon la revendication 1, à l'intérieur de laquelle est placé le(s) disque(s) ($DISC_1$, $DISC_2$) munie d'ouvertures ($FE_c$) permettant le passage de têtes de lecture/écriture ($TEL_1$, $TEL_2$) des informations contenues sur le disque ($DISC_1$) et d'un dispositif permettant d'obturer ces ouvertures lorsque la cartouche est au repos, le moyeu de la cartouche ($MOY_1$, $MOY_2$) comportant:

- des moyens cylindriques ($MCPRE_1$, $MCPRE_2$) en contact avec le plan de référence ($\Pi_1$, $\Pi_2$) pour précentrer le moyeu ($MOY_1$, $MOY_2$) sur l'axe de rotation des moyens d'entraînement ($PLENM_1$, $PLENM_2$),

- des moyens élastiques déformables en contact avec le cylindre de référence ($A_2$, $A_4$) pour un centrage fin du moyeu ($MOY_1$, $MOY_2$) par rapport audit axe de rotation,

caractérisée en ce que les moyens élastiques déformables sont constitués par une rondelle ($ROND_1$, $ROND_2$) montée et centrée sur le moyeu ($MOY_1$, $MOY_2$), en contact avec le plan de référence ($\Pi_1$, $\Pi_2$) et venant se placer à l'intérieur du cylindre de référence ($A_2$, $A_4$), l'enveloppe ($ENV_1$, $ENV_2$) de la cartouche coopérant avec des moyens ($MTF_1$, $MTF_2$) pour transmettre au moyeu ($MOY_1$, $MOY_2$) et à la rondelle ($ROND_1$, $ROND_2$), une force ($F_v$) de verrouillage normale au plan du disque qui déforme la rondelle de telle sorte que celle-ci exerce d'une part une pression normale au plan de référence ($\Pi_1$, $\Pi_2$) et d'autre part une pression normale (Pe) à la face du cylindre de référence ($A_2$, $A_4$).

3. Cartouche selon la revendication 2, caractérisée en ce que son enveloppe ($ENV_1$,

ENV$_2$) est élastiquement déformable et applique la force de verrouillage à l'association d'une pastille (PAST$_1$, PAST$_2$) en contact avec l'enveloppe (ENV$_1$, ENV$_2$), et d'une bille (BIL$_1$, BIL$_2$).

**Patentansprüche**

1. Plattenspeicher mit einer entfernbaren Kassette für Magnetplatte (n), die in eine geeignete Aufnahme für sie eingeschoben ist und gebildet ist aus einer Hülle (ENV$_1$, ENV$_2$), in deren Inneres die Platte (n) (DISC$_1$, DISC$_2$ bis DISC$_5$) eingeschoben ist (sind) und die mit Öffnungen (FE$_c$) versehen ist, welche das Hindurchtreten von Lese-/Schreibköpfen (TEL$_1$, TEL$_2$) für die auf der Platte (DISC$_1$) enthaltenen Informationen gestatten, und mit einer Vorrichtung versehen ist, welche das Verschließen dieser Öffnungen gestattet, wenn die Kassette im Ruhezustand ist, wobei die Nabe (MOY$_1$, MOY$_2$) der Platte (DISC$_1$) Mittel zum Ankoppeln derselben an Drehantriebsmittel (PLENM$_1$, PLENM$_2$) des Speichers umfaßt, welche eine Referenzebene ($\Pi_1$, $\Pi_2$) und einen Referenzzylinder (A$_2$, A$_4$) umfassen, wobei die Nabe (MOY$_1$, MOY$_2$) enthält:
   - zylindrische Mittel (MCPRE$_1$, MCPRE$_2$), welche mit der Referenzebene ($\Pi_1$, $\Pi_2$) in Berührung sind, um eine Vorzentrierung der Nabe auf der Drehachse der Antriebsmittel vorzunehmen,
   - elastische deformierbare Mittel (ROND$_1$, ROND$_2$), die in Berührung mit einem Referenzzylinder (A$_2$, A$_4$) stehen, um eine Feinzentrierung der Nabe (MOY$_1$, MOY$_2$) in bezug auf diese Drehachse vorzunehmen,
dadurch gekennzeichnet, daß die elastischen deformierbaren Mittel gebildet sind durch eine Rundscheibe (ROND$_1$, ROND$_2$), die auf der Nabe (MOY$_1$, MOY$_2$) montiert und zentriert ist sowie in Berührung mit der Referenzebene ($\Pi_1$, $\Pi_2$) steht sowie sich in das Innere des Referenzzylinders (A$_2$, A$_4$) hineinbewegt, wobei der Plattenspeicher Mittel (MTF$_1$, MTF$_2$) umfaßt, welche mit der Hülle (ENV$_1$, ENV$_2$) zusammenwirken, um auf die Nabe (MOY$_1$, MOY$_2$) und auf die Rundscheibe (ROND$_1$, ROND$_2$) eine Kraft (F$_v$) zur Verriegelung der Kassette senkrecht zur Plattenebene zu übertragen, durch welche die Rundscheibe derart deformiert wird, daß sie einerseits einen Druck senkrecht zur Referenzebene ($\Pi_1$, $\Pi_2$) und andererseits einen Druck senkrecht (P$_e$) zur Fläche des Referenzzylinders (A$_2$, A$_4$) ausübt.

2. Entfernbare Kassette für Magnetplatte (n), die dazu bestimmt ist, in eine geeignete Aufnahme des Plattenspeichers eingeschoben zu werden, nach Anspruch 1, in deren Inneres die Platte (n) (DISC$_1$, DISC$_2$) eingeschoben wird (werden), versehen mit Öffnungen (FE$_c$), die den Durchgang von Lese-/Schreibköpfen (TEL$_1$, TEL$_2$) für die auf der Platte (DISC$_1$) enthaltenen Informationen gestatten, und mit einer Vorrichtung zum Verschließen dieser Öffnungen, wenn die Kassette in Ruhestellung ist, wobei die Nabe der Kassette (MOY$_1$, MOY$_2$) umfaßt:
   - zylindrische Mittel (MCPRE$_1$, MCPRE$_2$), die mit der Referenzebene ($\Pi_1$, $\Pi_2$) in Berührung sind, um eine Vorzentrierung der Nabe (MOY$_1$, MOY$_2$) auf der Drehachse der Antriebsmittel (PLENM$_1$, PLENM$_2$) vorzunehmen,
   - elastische deformierbare Mittel, die in Berührung mit dem Referenzzylinder (A$_2$, A$_4$) sind, um eine Feinzentrierung der Nabe (MOY$_1$, MOY$_2$) in bezug auf die genannte Drehachse vorzunehmen,
dadurch gekennzeichnet, daß die elastischen deformierbaren Mittel durch eine Rundscheibe (ROND$_1$, ROND$_2$) gebildet sind, welche auf der Nabe (MOY$_1$, MOY$_2$) montiert und zentriert ist sowie in Berührung mit der Referenzebene ($\Pi_1$, $\Pi_2$) ist und in das Innere des Referenzzylinders (A$_2$, A$_4$) bewegt wird, wobei die Hülle (ENV$_1$, ENV$_2$) der Kassette mit Mitteln (MTF$_1$, MTF$_2$) zusammenwirkt, um auf die Nabe (MOY$_1$, MOY$_2$) und auf die Rundscheibe (ROND$_1$, ROND$_2$) eine Verriegelungskraft (F$_v$) zu übertragen, welche senkrecht zur Ebene der Platte ist und welche die Rundscheibe derart deformiert, daß diese einerseits einen Druck senkrecht zur Referenzebene ($\Pi_1$, $\Pi_2$) und andererseits einen Druck senkrecht (P$_e$) zur Fläche des Referenzzylinders (A$_2$, A$_4$) ausübt.

3. Kassette nach Anspruch 2, dadurch gekennzeichnet, daß ihre Hülle (ENV$_1$, ENV$_2$) elastisch deformierbar ist und die Verriegelungskraft ausübt auf eine Vereinigung einer mit der Hülle (ENV$_1$, ENV$_2$) in Berührung stehende Kapsel (PAST$_1$, PAST$_2$) mit einer Kugel (BIL$_1$, BIL$_2$).

**Claims**

1. Disc memory including a removable cartridge for magnetic discs inserted into an appropriate location of the same and formed by a casing (ENV$_1$, ENV$_2$) within which is/are placed the disc(s) (DISC$_1$, DISC$_2$ to DISC$_5$) and provided with openings (FE$_c$) permitting the passage of read/write heads (TEL$_1$, TEL$_2$) for the data contained on the disc (DISC$_1$) and with a device permitting to close off these openings when the cartridge is at rest, the hub (MOY$_1$, MOY$_2$) of the disc (DISC$_1$) comprising means for coupling the same to rotational drive means (PLENM$_1$, PLENM$_2$) of the memory, these latter comprising a reference plane ($\Pi_1$, $\Pi_2$) and a reference cylinder (A$_2$, A$_4$), the hub (MOY$_1$, MOY$_2$) comprising:
   - cylindrical means (MCPRE$_1$, MCPRE$_2$) in contact with the reference plane ($\Pi_1$, $\Pi_2$) for pre-centring the hub on the axis or rotation of the driving means,
   - deformable elastic means (ROND$_1$, ROND$_2$) in contact with a reference cylinder (A$_2$, A$_4$) for precise centring of the hub (MOY$_1$, MOY$_2$) with

respect to this axis of rotation,

characterised in that the deformable elastic means are formed by a ring (ROND$_1$, ROND$_2$) mounted and centred on the hub (MOY$_1$, MOY$_2$), in contact with the reference plane ($\Pi_1$, $\Pi_2$) and placed within the reference cylinder (A$_2$, A$_4$), the disc memory comprising means (MTF$_1$, MTF$_2$) cooperating with the casing (ENV$_1$, ENV$_2$) for transmitting to the hub (MOY$_1$, MOY$_2$) and to the ring (ROND$_1$, ROND$_2$) a locking force (F$_v$) for the cartridge normal to the plane of the disc, which deforms the ring in such manner that it exerts on the one hand a pressure normal to the reference plane ($\Pi_1$, $\Pi_2$) and on the other hand a pressure (Pe) normal to the surface of the reference cylinder (A$_2$, A$_4$).

2. Removable cartridge for magnetic disc(s) intended to be inserted into an appropriate location of the disc memory according to claim 1, within which is/are placed the disc(s) (DISC$_1$, DISC$_2$), provided with openings (FE$_c$) permitting the passage of read/write heads (TEL$_1$, TEL$_2$) for the data contained on the disc (DISC$_1$) and with a device permitting these openings to be closed off when the cartridge is at rest, the cartridge hub (MOY$_1$, MOY$_2$) comprising:

- cylindrical means (MCPRE$_1$, MCPRE$_2$) in contact with the reference plane ($\Pi_1$, $\Pi_2$) for pre-centring the hub (MOY$_1$, MOY$_2$) on the axis of rotation of the driving means (PLENM$_1$, PLENM$_2$),

- deformable elastic means in contact with the reference cylinder (A$_2$, A$_4$) for precise centring of the hub (MOY$_1$, MOY$_2$) with respect to the said axis of rotation,

characterised in that the deformable elastic means are formed by a ring (ROND$_1$, ROND$_2$) mounted and centred on the hub (MOY$_1$, MOY$_2$), in contact with the reference plane ($\Pi_1$, $\Pi_2$) and placed within the reference cylinder (A$_2$, A$_4$), the casing (ENV$_1$, ENV$_2$) of the cartridge cooperating with means (MTF$_1$, MTF$_2$) for transmitting to the hub (MOY$_1$, MOY$_2$) and to the ring (ROND$_1$, ROND$_2$) a locking force (F$_V$) normal to the plane of the disc which deforms the washer in such manner that it exerts on the one hand a pressure normal to the reference plane ($\Pi_1$, $\Pi_2$) and on the other hand a pressure (Pe) normal to the surface of the reference cylinder (A$_2$, A$_4$).

3. Cartridge according to claim 2, characterised in that its casing (ENV$_1$, ENV$_2$) is elastically deformable and applies the locking force to the combination of a contact piece (PAST$_1$, PAST$_2$) in contact with the casing (ENV$_1$, ENV$_2$), and a ball (BIL$_1$, BIL$_2$).

FIG. 1

FIG. 2

FIG. 3

FIG. 4

MEMO

FEm
TEL₁
TEL₂
A₂        A₁
RL₂
RL₁
PLENM₁
FEc
DISC₁
BAT₁
RAIN₁
RAIN₂
CART₁
PPR
FI

FIG. 5

MTF₁
ENV₁
MOY₁   DISC₁   CART₁
MCPRE₁
ROND₁   MCPRE₁

FIG. 6

FEc
Fᵥ   MTF₁
TEL₁
MOY₁   DISC₁   CART₁
TEL₂
Pᵥ
e
A₁
A₁
Pₗ
ENV₁
Pₙ
ROND₁   Pₙ
PLENM₁
TI₁
A₂
Axᵣ

3

FIG. 7

FIG.8

FIG. 9

FIG. 10

FIG. 10a

FIG.10 b

FIG. 11

FIG. 12

FIG. 13a

FIG. 13b

FIG. 13c

FIG. 13